# EUROPEAN PATENT SPECIFICATION

(11) **EP 3 370 906 B1**
(45) Date of publication and mention of the grant of the patent: **24.05.2023**
(21) Application number: 15790912.8
(22) Date of filing: 02.11.2015
(51) Int. Cl.: B23D 15/04, B23D 35/00

(54) **A CUTTER FOR CUTTING A ROD**
SCHNEIDVORRICHTUNG ZUM SCHNEIDEN EINES STABS
DISPOSITIF DE COUPE POUR COUPER UNE TIGE

(43) Date of publication of application: 12.09.2018
(73) Proprietor: R.M. Meccanica S.r.l., 10087 Valperga (TO) (IT)
(72) Inventor: MAGNINO, Domenico, I-10080 Salassa (IT); ROSTAGNO, Gianpaolo, I-10080 Salassa (IT)
(74) Representative: Di Sciuva, Michele
(86) International application number: PCT/EP2015/075488
(87) International publication number: WO 2017/076423

(56) References cited:
- DE-B- 1 225 469
- DE-U1- 9 401 546

## Description

### TECHNICAL FIELD

The present invention relates to a cutter for cutting a rod, as per the preamble of claim 1. An example of such a cutter is disclosed by DE 94 01 546 U.

In particular, the present invention relates to a cutter for hot-cutting, i.e. cutting a temperature greater than 800 °C, a rod of steel.

### BACKGROUND ART

As it known, rods of steel are hot-cut in a plurality of elongated elements and at the temperature greater than 800 °C by making use of a cutting assembly.

In greater detail, the cutting assembly cuts the rods of steel along a first cutting axis, as the rods advance along a second advancing axis.

The cutting assembly essentially comprises a first and a second cutter which are slightly offset along the second advancing axis and are superimposed to one another along the first cutting axis.

Furthermore, the first cutter assembly is stationary with respect to the first cutting axis while the second cutter assembly can reciprocate with respect to the first cutter along the first cutting axis.

More precisely, the second cutter reciprocates between:
- a rest position, in which it is spaced apart from the rod and is set in the farther position from the first cutter along the first cutting axis; and
- an operative position, in which it contacts the rod and is set in the closer position from the first cutter along the first cutting axis.

The first and the second cutter substantially comprise, each,:
- a frame; and
- a cutting element, which is integral with the frame and defines a cutting edge.

The cutting edge of each first and second cutter is shaped as a semi-circumference arc open towards the other first and second cutter.

Due to the movement of the second cutter, the cutting assembly is cyclically set in:
- a closed configuration, in which the second cutter in the operative position, the seats of the first and the second cutter define a circular passage for the rod, and the cutting edges cut the rod at a transversal section thereof; and
- an open configuration, in which the second cutter is in the rest position, the cutting edges are spaced apart from one another and the rod can advance without being cut.

In particular, during the cutting operation, the cutting edges undergo very high temperature.

Even though some refrigerating systems for refrigerating the cutting edges have been proposed, the known solutions leave room for improvement.

In greater detail, the very high temperature at which the cutting edges operate affects, on one side, the life-time of the cutting edges and, on the other side, affects the precision in the cutting of the rods along the first cutting axis and in a plane orthogonal to the second advancing axis.

Furthermore, every time that it necessary to replace the cutting edge, a replacement of the whole first or second cutter is also needed.

### DISCLOSURE OF INVENTION

It is an object of the present invention to provide a cutter for cutting rods, which is designed to eliminate at least one of the drawbacks connected with the known cutter in a straightforward, relatively low-cost manner.

The aforementioned object is achieved by the present invention as it relates to a cutter for cutting rods, as claimed in claim 1.

### BRIEF DESCRIPTION OF THE DRAWINGS

One preferred embodiment is hereinafter disclosed for a better understanding of the present invention, by way of non-limitative example and with reference to the accompanying drawings, in which:
- Figure 1 is an exploded perspective view of a cutter for cutting rods in accordance with the present invention;
- Figure 2 is a lateral view in an enlarged scale and with parts sectioned for clarity of a cutting assembly comprising a pair of cutters of the type shown in Figure 1;
- Figures 3 to 5 are lateral views, with part sectioned for clarity, of the cutting assembly of Figure 2 in respective consecutive operative steps; and
- Figure 6 is an enlarged view of the cutting assembly of Figures 2 to 5.

### BEST MODE FOR CARRYING OUT THE INVENTION

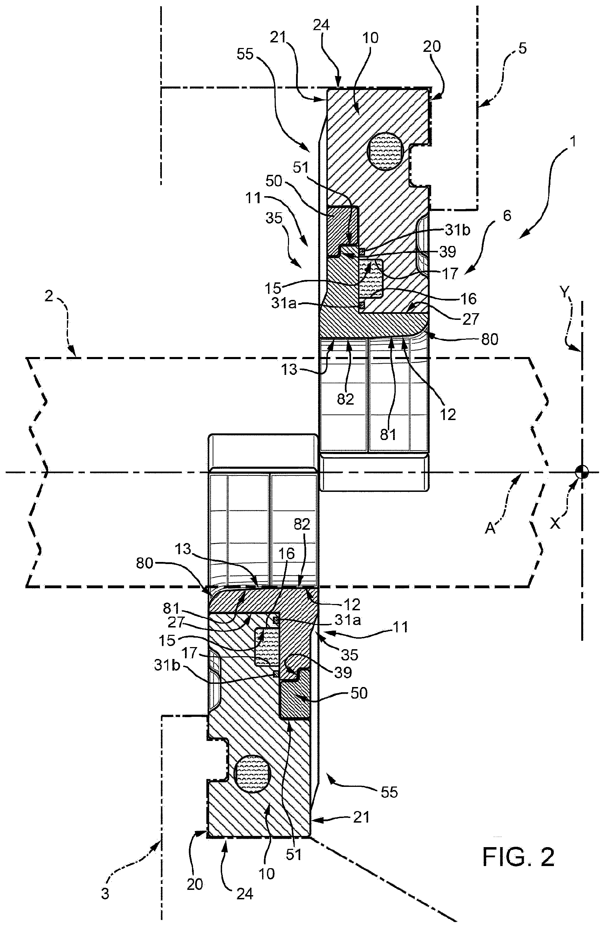

With reference to Figure 2 to 6, numeral 1 indicates as a whole a cutting assembly for cutting a rod 2.

In particular, cutting assembly 1 cuts rod 2 along an axis Y orthogonal to axis A, so as to form a cut element 7, which is detached from a remaining portion 8 of rod 2.

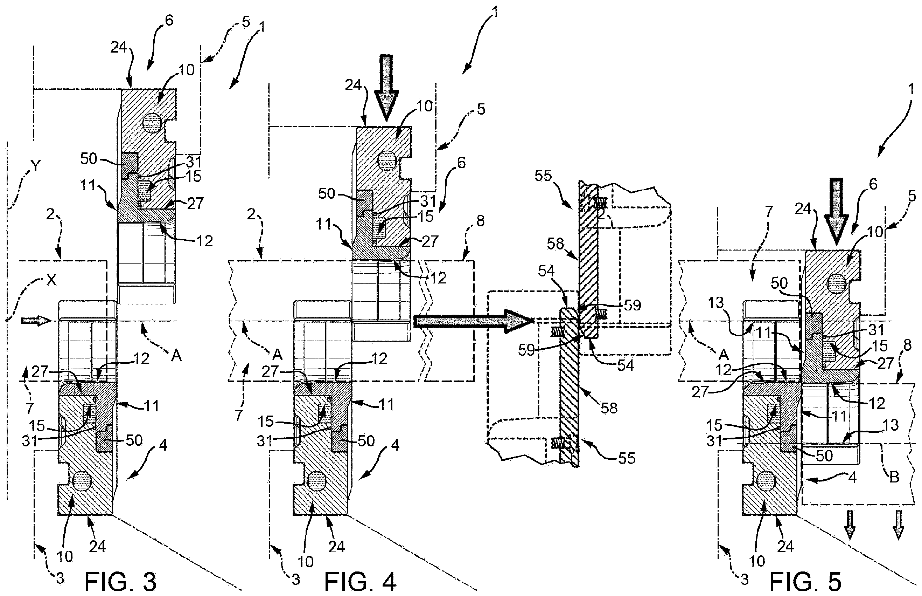

With reference to Figure 5, cut element 7 is advanced along an its own axis B, which is parallel to axis A.

Remaining portion 8 of rod 2 advances parallel to an axis A and has an its own axis parallel to axis A.

It is also possible to identify an axis X, which is orthogonal to axes A and Y.

In the embodiment shown, the cutting assembly is adapted to hot-cut, i.e. cutting a temperature greater than 800 °C, a rod of steel.

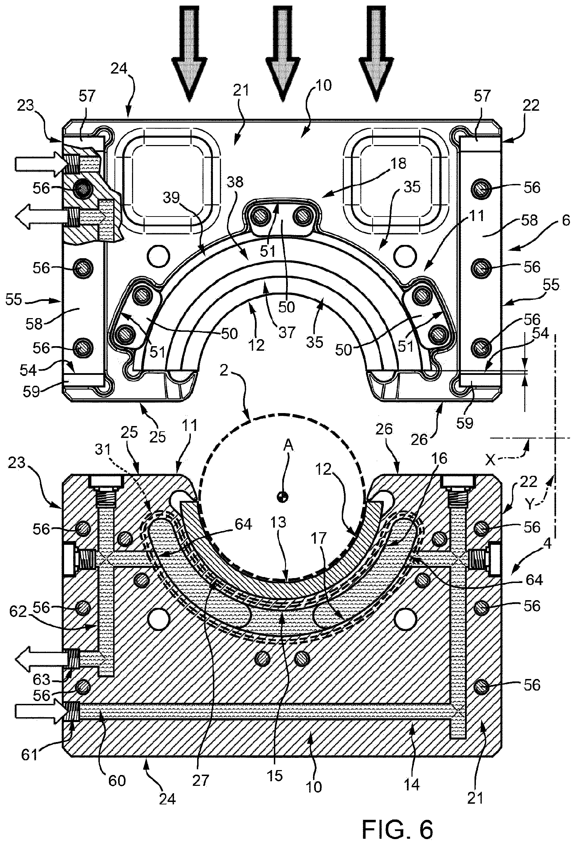

Cutting assembly 1 substantially comprises (Figures 2 to 5):
- a holder 3, which is stationary along axis Y;
- a cutter 4, which is fitted to holder 3 and is stationary about axis Y;
- a holder 5, which can move along axis Y towards and away from holder 3; and
- a cutter 6, which is fitted to holder 5 and movable together with holder 5 along axis Y towards and away from holder 5 between an rest position (Figure 4) and an operative position (Figure 6).

Furthermore, cutters 4, 6 are offset along axis A.

Rod 2 is advanced, in use, by not-shown means parallel to axis A and between cutter 4, 6.

Still more precisely, cutter 6 is arranged downstream of cutter 4, proceeding according the advancement sense of rod 2 parallel to axis A.

Furthermore, cutter 6 is set spaced apart from rod 2, when it is set in the rest position (Figure 4).

Differently, cutters 4 and 6 cooperate with one another to grip and cut rod 2, as cutter 6 is in the operative position (Figure 5).

Still more precisely, cutter 6 is in the closest position with respect to cutter 4 along axis Y, when it is set in the operative position.

Cutter 6 is in the farthest position with respect to cutter 4 and along axis Y, when it is set in the rest position.

Cutter 6 can also assume an intermediate position (Figure 4) along axis Y and between the rest position and the operative position.

In the following of the present description, only cutter 4 will be described, being cutter 6 identical to cutter 4.

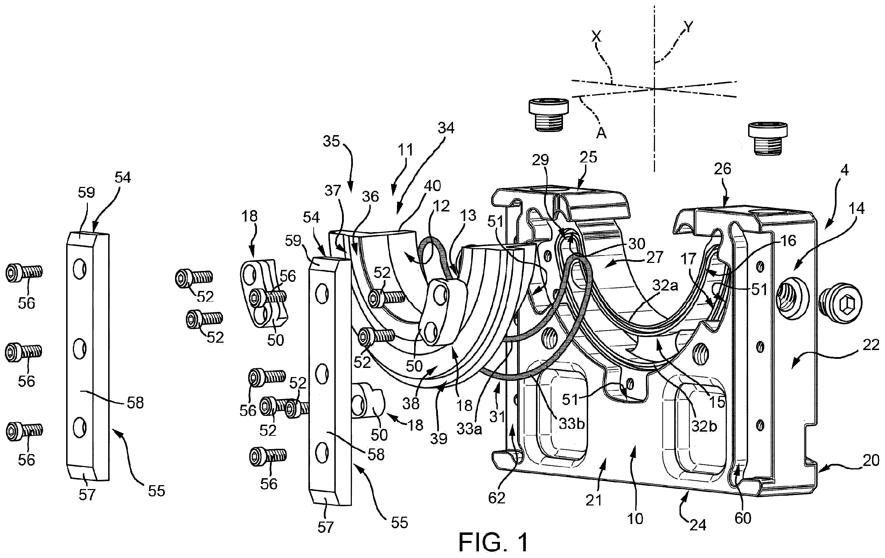

In greater detail, cutter 4 essentially comprises (Figures 1 and 6):
- a frame 10, which is fixed to holder 3;
- a cutting element 11, which is fixed to frame 10, comprises a curved cutting surface 12 and defines an open seat 13 bounded by surface 12; and
- a refrigerating circuit 14 for refrigerating surface 12 and defined by frame 10.

Advantageously, refrigerating circuit 14 comprises a chamber 15, which is filled with a refrigerating fluid and is thermally coupled with cutting surface 12; chamber 15 is bounded by a wall 16, which is arc-shaped, extends on the opposite side of seat 13 with respect to axis Y and extends parallel to surface 12 in a cross section taken orthogonal to axis A.

It is important to stress that the expression "parallel" is used to indicate in the present description that wall 16 and surface 12 are curved and have substantially identical shapes.

Advantageously, cutting element 13 is distinct from and releasably connected to frame 10 by releasable connecting means 18.

Frame 10 is bounded by:
- a pair of walls 20, 21 which are opposite to each other and lie substantially on respective planes orthogonal to axis A;
- a pair of walls 22, 23, which are opposite to one another, extend between walls 20, 21 and lies on respective planes orthogonal to axis X;
- a wall 24, which lies on a plane orthogonal to axis Y and extends between walls 22, 23;
- a pair of walls 25, 26, which protrude from respective walls 22, 23, are separated from one another, extend on a plane orthogonal to axis Y and are opposite to wall 24; and
- a wall 27, which is opposite to wall 24 parallel to axis Y.

In particular, wall 27 extends between walls 25, 26 and defines seat 13.

Furthermore, wall 27 extends at first at progressively decreasing distances from wall 24 and then at progressively increasing distances from wall 24, proceeding from wall 25 to wall 26.

Wall 16 of chamber 15 and wall 27 of frame 10 extend substantially at a constant distance measured parallel to axis Y, proceeding from wall 24 to wall 25.

Chamber 15, which is C-shaped in a section taken in a plane orthogonal to axis Y.

Chamber 15 is bounded, parallel to axis Y, by:
- wall 16 on the side of seat 13; and
- wall 17 on the opposite side of seat 13.

In particular, wall 17 is interposed between wall 16 and wall 24 parallel to axis Y.

Wall 17 is arc-shaped and parallel to wall 16.

In the embodiment shown, walls 16, 17 are symmetrical with respect to a mid-plane of wall 24, which extends orthogonal to axis X.

Chamber 15 is closed by wall 20 on one side parallel to axis A and is closed, on the side of wall 21 by cutting element 11, as it will be clear in the following of the present description.

Walls 16, 17 are rounded to one another.

Wall 20 of frame 10 defines a slot 30, which surrounds an axial end 29 of chamber 15 and houses a seal 31.

Seal 31 is clamped between slot 30 and cutting element 11 and tight-fluid seals chamber 15.

Slot 30 has a closed contour, which surrounds axial end 29 of chamber 15 defined by wall 21.

Still more precisely, slot 30 comprises a pair of stretches 32a, 32b which are C-shaped and rounded to one another.

Seal 31 has a closed contour.

Seal 31 comprises a pair of stretches 33a, 33b which are housed in respective stretches 32a, 32b of slot 30.

Cutting element 11 extends symmetrically about axis A and substantially comprises:
- a disk 35, which extends about an axis parallel to axis A;
- a pair of head surfaces 34, which protrude from an axial end of disk 35 along axis A, are spaced from one another along axis X, and lie on a plane parallel to axis Y; and a
- cutting surface 12, which extends between head surface 34, protrudes from disk 35 towards wall 20.

In greater detail, disk 35 comprises, proceeding radially to axis A and on the opposite radial direction to axis A,:
- a ring 36 orthogonal to axis A and defining an axial end of cutting surface 12;
- an edge 37 inclined with respect to axis A;
- a surface 38 orthogonal to axis A; and
- a surface 39 orthogonal to axis A.

Ring 36, edge 37, surface 38 and surface 39 are arranged in this sequence, proceeding parallel to axis A and in a direction oriented from wall 20 to wall 21.

Surfaces 34 comprise respective portions 40, which protrude from disk 35 on the side of wall 21 and along axis A.

Seat 13 is coaxial with axis A.

In the embodiment showm, seat 13 is C-shaped and extends for 180 degrees around axis A.

With particular reference to Figures 2 to 5, surface 39 of disk 35 closes chamber 15 on the opposite side of wall 21.

Furthermore, cutting surface 12 and wall 27 have the same length parallel to axis A.

The length of chamber 15 parallel to axis A is smaller than the length parallel to axis A of cutting surface 12 and wall 27.

In the embodiment shown, cutting surface 12 comprise, proceeding from wall 20 to wall 21:
- a rounded portion 80 converging towards axis A;
- a tapered portion 81 converging towards axis A; and
- a cylindrical portion 82 coaxial with axis A.

At least portion 82 of cutting surface 12 extends around axis A for 180 degrees.

Seal 31 is axially pressed between surface 39 of disk 35 and slot 30 of frame 10.

Furthermore, cutting surface 12 is superimposed parallel to axis A onto wall 27 of frame 10.

In particular, the distance between homologous - i.e. arranged at the same angular distances from a fixed direction and about axis A - points of walls 16, 27 measured radially to axis A is smaller than the distance measured radially to axis A between homologous points of walls 17, 16.

In other words, the height of chamber 15 measured radial to axis A is greater than the distance radial to axis A between walls 16, 27.

Finally, surfaces 36 are fitted to respective walls 25, 26 of frame 10.

Still more precisely, surfaces 36 are fitted to frame 10 below walls 25, 26.

Connecting means 18 comprise (Figures 1 and 6) a plurality, three in the embodiment shown, of brackets 50, which are arranged in respective seats 51 of wall 21 at angularly spaced positions with respect to axis A.

In greater detail, surface 39 is clamped parallel to axis A between brackets 50 and wall 21 of frame 10 (Figure 6) .

Furthermore, brackets 50 abut against surface 39 of disk 35 parallel to axis A

In particular, brackets 50 are screwed to wall 21 of frame 10 by means of respective pair of screws 52.

Seats 51 are radially outer with respect to chamber 15 and with reference to axis A.

Cutter 4 further comprises a pair of guides 55, which extend parallel to axis Y and are spaced apart from one another.

Guides 55 are releasably fitted, by means of screws 56, to respective sides of wall 21 on respective opposite sides of chamber 15.

In particular, guides 55 are arranged on opposite sides of brackets 50 with respect to chamber 15.

Each guide 55 comprises, proceeding parallel to axis Y and from wall 24 of frame 10 to relative wall 25, 26 of frame 10:
- an end surface 57 sloped with respect to a plane orthogonal to axis A;
- a main surface 58, which is orthogonal to axis A; and
- an end surface 59 sloped with respect to the plane orthogonal to axis A.

Each guide 55 comprises an end 54, which separates relative surface 58 and surface 59.

End 54 is arranged on the opposite side of relative surfaces 34 with respect to relative surface 57, proceeding parallel to axis Y.

Surfaces 58 of guides 55 of cutter 6 and corresponding surfaces 58 of guides 55 of cutter 4 are adapted to slide one over the other (Figure 6), when cutter 6 reaches the operative position, so as to avoid the interference between cutting surfaces 12 of cutters 4, 6.

Refrigerating circuit 14 comprises (Figure 6):
- an inlet duct 60 which extends from an inlet 61 for cold water defined by wall 23 to chamber 15; and
- an outlet duct 62 which extends from chamber 15 to an outlet 63 for hot water defined by wall 23.

Duct 60 comprises a first stretch orthogonal to axis A, Y, a second stretch parallel to axis Y and a third stretch orthogonal to axis A, Y, proceeding from inlet 61 to chamber 15.

Duct 62 comprises a first stretch orthogonal to axis A, Y, a second stretch parallel to axis Y and a third stretch orthogonal to axis A, Y, proceeding from chamber 15 to outlet 63.

Wall 17 of chamber 15 defines respective openings 64 opposite to another and symmetrical with respect to axis A and in fluidic connection with respective ducts 60, 62.

The first stretches of duct 60, 62 are covered by guides 55, when the latter are screwed on frame 10.

The operation of cutting assembly 1 is described starting from the configuration shown in Figure 2, in which cutter 6 is in the rest position, at which it is arranged at the maximum distance from cutter 4 along axis Y.

In the meanwhile, rod 2 is advanced along axis A at a temperature of more than 800 °C.

In order to cut rod 2 at an intermediate section thereof and along axis Y, cutter 6 is moved parallel to axis A at first in the intermediate position (Figure 4) and then in the final position (Figure 5).

When cutter 6 reach the final position (Figure 5), cutting surfaces 12 of cutters 4, 6 contact respective opposite halves of rod 2 at respective position offset along axis A, and cut rod 2 in two portions.

In greater detail, a half of remaining portion 8 of rod 2 is housed inside seat 13 of cutter 4 while a half of portion 7 of rod 2 is housed in seat 13 of cutter 6.

As portion 7 has been cut from remaining portion 8 of rod 2, it is moved away from cutter 4, 6 parallel to axis A and advanced parallel to axis B.

As cutter 6 moves parallel to axis Y towards cutter 4, surfaces 58 of guides 55 of cutter 6 slide onto surfaces 58 of relative guides 55 of cutter 4, thus ensuring that cutting surfaces 12 of cutters 4, 6 do not interfere with one another (Figures 4 and 5).

Refrigerating circuits 14 are effective in refrigerating cutting surfaces 12 of cutter 4, 6 at very low temperature, for example 260 °C, during the cutting of rod 2.

In greater detail, the refrigerating fluid, cold water in the embodiment shown, enters inlet 61, flows along duct 62 and enters chamber 15 through relative opening 64.

The refrigerating fluid, thanks to the large exchange surface between wall 16 of chamber 15 and cutting surface 12, is effective to keep the temperature of cutting surface 12 at very low temperature, e.g. 280 °C, in comparison with the temperatures of rod 2.

The warmed up refrigerating fluid moves away from chamber 15 and reaches duct 62 through relative opening 64 of chamber 15.

Finally, the warmed up refrigerating fluid exits from cutters 4, 6 through relative outlet 63.

From an analysis of the features of cutter 4, 6 made according to the present invention, the advantages it allows to obtain are apparent.

In greater detail, chamber 15 comprises a wall 16, which extends parallel to cutting surface 12 and is arranged underneath cutting surface 12.

Accordingly, the thermal exchange surface between chamber 15 and cutting surface 12 is particularly high, thus ensuring a very effective cool action on cutting surface 12.

As a result of the cooling action of the refrigerant liquid flowing inside chamber 15, the temperature of cutting surface 12 remains at about 280 °C during the cutting of rod 2.

This particularly low temperature increases the life-time of cutting surface 12 and of cutter 4, 6. In this respect, the Applicant has found that the life-time of cutter 4, 6 can be even reach the double of the life-time of customary cutters described in the introductory part of the present description.

Furthermore, this particularly low temperature ensures, with a higher degree of repeatibility, a particularly precision in cutting the rods orthogonally to the axis thereof.

Finally, the low operative temperature of cutting surface 12 allows manufacturing cutter element 11 as a detached body from frame 10.

Accordingly, cutter element 11 can be made by means of machining operation, for example by lathing or milling, thus rendering the manufacturing tolerances of cutting surface 12 particularly narrow and correspondingly increasing the precision and repeatibility of the cutting operation.

Finally, it is apparent that modifications and variants not departing from the scope of protection of the claims may be made to cutter 4, 6.

## Claims

1. A cutter (4, 6) for hot-cutting a rod (2), preferably a rod (2) of steel, along a first axis (Y), comprising:
- a frame (10);
- a cutting element (11), which is fitted to said frame (10), comprises an arc-shaped cutting surface (12) adapted, in use, to cut said rod (2), and defines an open seat (13) bounded by said cutting surface (12); and
- a refrigerating circuit (14), which is adapted to refrigerate said cutting surface (12) and is defined by said frame (10);
said refrigerating circuit (14) comprising a chamber (15), which is fillable with a refrigerating fluid and is thermally coupled with said cutting surface (12) for removing heat from said cutting surface (12);
**characterized in that** said chamber (15) is bounded by a first wall (16), which is arc-shaped, extends on the opposite side of said seat (13) with respect to said cutting surface (12) and with respect to said first axis (Y), and extends parallel to said cutting surface (12) in a cross section taken orthogonal to a second axis (A) orthogonal to said first axis (Y) and along which said rod (2) is, in use, advanced;
said seat (13) being coaxial with respect to said second axis (A).

2. The cutter of claim 1, **characterized in that** said first wall (16) is arc-shaped around said second axis (A), and has a length along said second axis (A).

3. The cutter of claim 1 or 2, **characterized in that** said chamber (15) comprises a second wall (17), which is arc-shaped and is opposite to said first wall (16) along said first axis (Y).

4. The cutter of any one of the foregoing claims, **characterized in that** said first wall (16) has an extension narrower than said cutting surface (12) parallel to said second axis (A); and/or
**characterized in that** said frame (10) comprises a third wall (27) which is axially interposed between said cutting surface (12) and said first wall (16) radially to said second axis (A).

5. The cutter of claim 4, **characterized in that** said third wall (27) has substantially the same length of said cutting surface (12) along said second axis (A).

6. The cutter of claim 4 or 5, **characterized in that** said first wall (16) has a length smaller than said cutting surface (12) and/or than said third wall (27) along said second axis (A).

7. The cutter of any one of claims 4 to 6, when depending on any one of claims 2 or 3, **characterized in that** said third wall (27) bounds said frame (10) on the side of said seat (13);
a first distance between homologous points of said third wall (27) and said first wall (16) measured radially with respect to said second axis (A) being smaller than a second distance between homologous points of said second wall (17) and said first wall (16) measured radially with respect to said second axis (A).

8. The cutter of any one of the foregoing claims, **characterized in that** said cutting element (11) comprises an arc-shaped disk (35) extending about said second axis (A);
said cutting surface (12) protruding from said disk element (35) along said second axis (A).

9. The cutter of claim 8, **characterized in that** said chamber (15) is closed by said frame (10) on a first side along said second axis (A) and is closed by said disk (35) on a second side, opposite to said first side, along said second axis (A).

10. The cutter of claims 8 or 9, **characterized in that** said frame (10) defines a closed-shape slot (30), which surrounds an axial end of said chamber (15) on the side of said disk (35);
said cutter (4, 6) further comprising a seal (31), which engages said slot (30) and is pressed between said disk (35) and said frame (10).

11. The cutter of any one of the foregoing claims, **characterized in that** said refrigerating circuit (14) comprise:
- an inlet duct (60), which is fluidly connected with said chamber (15) and is arranged upstream of said chamber (15), proceeding according to the advancing direction of said refrigerating fluid inside said refrigerating circuit (14) ;
- an outlet duct (62), which is fluidly connected with said chamber (15) and is arranged downstream of said chamber (15), proceeding according to the advancing direction of said refrigerating fluid inside said refrigerating circuit (14); and/or
**characterized in that** said cutting element (11) is releasably connected to said frame (10).

12. The cutter of claim 11, **characterized in that** said cutting element (11) is releasably clamped between at least one bracket (50) and said frame (10);
said bracket (50) being screwed to said frame (10).

13. The cutter of claim 12, when depending on any one of claims 2 to 11, **characterized by** comprising at least one seat (51), which is opposite to said second wall (16) with respect to said first wall (15), receives said bracket (50), and is defined by a wall (21) of said frame (10); said wall (21) bounding said frame (10) on the axial side of said cutting element (11).

14. The cutter of any one of the foregoing claims, **characterized in that** said frame (10) comprises guide means (55), which are adapted to contact corresponding guide means (55) of a corresponding cutter (6, 4), so as to avoid the interference between said cutting surface (12) and a corresponding cutting surface (12) of said corresponding cutter (6, 4);
said guide means (55) comprising a pair of guides (55) having each respective planar portions (58) orthogonal to said second axis (A);
said portions (58) extending, parallel to said first axis (Y), beyond said cutting surface (12), and being closer than said cutting surface (12) to said second axis (A);
said guides (55) being releasably connected to a wall (21) of said frame (10); said wall (21) bounding said frame (10) on the axial side of said cutting element (11).

15. An assembly (1) for cutting a rod (2) comprising a first cutter (4) and a second cutter (6) according to any one of the foregoing claims;
said first cutter (4) and said second cutter (6) being movable relative to one another along said first axis (Y) and being arranged on the opposite side of said second axis (A) along which said rod (2) advances, in use,;
said first cutter (4) and said second cutter (6) being offset parallel to said second axis (A).

## Patentansprüche

1. Schneidvorrichtung (4, 6) zum Heißschneiden eines Stabes (2), vorzugsweise eines Stabes (2) aus Stahl, entlang einer ersten Achse (Y), umfassend:
- einen Rahmen (10);
- ein Schneidelement (11), welches an dem Rahmen (10) angebracht ist, eine bogenförmige Schneidfläche (12) aufweist, die im Gebrauch dazu ausgelegt ist, den Stab (2) zu schneiden, und einen offenen Sitz (13) definiert, der durch die Schneidfläche (12) begrenzt ist; und
- einen Kühlkreislauf (14), der dazu ausgelegt ist, die Schneidfläche (12) zu kühlen, und der durch den Rahmen (10) definiert ist;
wobei der Kühlkreislauf (14) eine Kammer (15) umfasst, die mit einem Kühlfluid gefüllt werden kann und thermisch mit der Schneidfläche (12) gekoppelt ist, um Wärme von der Schneidfläche (12) abzuleiten;
**dadurch gekennzeichnet, dass** die Kammer (15) durch eine erste Wand (16) begrenzt ist, die bogenförmig ist, sich auf der gegenüberliegenden Seite des Sitzes (13) in Bezug auf die Schneidfläche (12) und in Bezug auf die erste Achse (Y) erstreckt und sich parallel zu der Schneidfläche (12) in einem Querschnitt erstreckt, der senkrecht zu einer zweiten Achse (A) ist, die senkrecht zu der ersten Achse (Y) ist und entlang welcher der Stab (2) im Gebrauch vorgeschoben wird;
wobei der Sitz (13) koaxial zu der zweiten Achse (A) ist.

2. Schneidvorrichtung nach Anspruch 1, **dadurch gekennzeichnet, dass** die erste Wand (16) bogenförmig um die zweite Achse (A) verläuft und eine Länge entlang der zweiten Achse (A) aufweist.

3. Schneidvorrichtung nach Anspruch 1 oder 2, **dadurch gekennzeichnet, dass** die Kammer (15) eine zweite Wand (17) aufweist, die bogenförmig ist und der ersten Wand (16) entlang der ersten Achse (Y) gegenüberliegt.

4. Schneidvorrichtung nach einem der vorhergehenden Ansprüche,
**dadurch gekennzeichnet, dass** die erste Wand (16) eine schmalere Erstreckung als die Schneidfläche (12) parallel zur zweiten Achse (A) aufweist; und/oder
**dadurch gekennzeichnet, dass** der Rahmen (10) eine dritte Wand (27) umfasst, die axial zwischen der Schneidfläche (12) und der ersten Wand (16) radial zur zweiten Achse (A) angeordnet ist.

5. Schneidvorrichtung nach Anspruch 4, **dadurch gekennzeichnet, dass** die dritte Wand (27) im Wesentlichen die gleiche Länge der Schneidfläche (12) entlang der zweiten Achse (A) aufweist.

6. Schneidvorrichtung nach Anspruch 4 oder 5, **dadurch gekennzeichnet, dass** die erste Wand (16) eine geringere Länge als die Schneidfläche (12) und/oder als die dritte Wand (27) entlang der zweiten Achse (A) aufweist.

7. Schneidvorrichtung nach einem der Ansprüche 4 bis 6, unter Rückbezug auf Ansprüche 2 oder 3, **dadurch gekennzeichnet, dass** die dritte Wand (27) den Rahmen (10) auf der Seite des Sitzes (13) begrenzt; wobei ein erster Abstand zwischen homologen Punkten der dritten Wand (27) und der ersten Wand (16), gemessen radial in Bezug auf die zweite Achse (A), kleiner ist als ein zweiter Abstand zwischen homologen Punkten der zweiten Wand (17) und der ersten Wand (16), gemessen radial in Bezug auf die zweite Achse (A).

8. Schneidvorrichtung nach einem der vorhergehenden Ansprüche,
**dadurch gekennzeichnet, dass** das Schneidelement (11) eine bogenförmige Scheibe (35) umfasst, die sich um die zweite Achse (A) erstreckt, wobei die Schneidfläche (12) von dem Scheibenelement (35) entlang der zweiten Achse (A) vorsteht.

9. Schneidvorrichtung nach Anspruch 8, **dadurch gekennzeichnet, dass** die Kammer (15) durch den Rahmen (10) auf einer ersten Seite entlang der zweiten Achse (A) und durch die Scheibe (35) auf einer zweiten, der ersten Seite gegenüberliegenden Seite entlang der zweiten Achse (A) verschlossen ist.

10. Schneidvorrichtung nach Anspruch 8 oder 9, **dadurch gekennzeichnet, dass** der Rahmen (10) einen geschlossen geformten Schlitz (30) definiert, der das axiale Ende der Kammer (15) auf der Seite der Scheibe (35) umgibt;
wobei die Schneidvorrichtung (4, 6) ferner eine Dichtung (31) umfasst, die in den Schlitz (30) eingreift und zwischen die Scheibe (35) und den Rahmen (10) gepresst ist.

11. Schneidvorrichtung nach einem der vorhergehenden Ansprüche,
**dadurch gekennzeichnet, dass** der Kühlkreislauf (14) Folgendes umfasst:
- einen Einlasskanal (60), der mit der Kammer (15) in Fluidverbindung steht und stromaufwärts von der Kammer (15) angeordnet ist, wobei er entsprechend der Vorschubrichtung des Kühlfluids innerhalb des Kühlkreislaufs (14) verläuft;
- einen Auslasskanal (62), der mit der Kammer (15) in Fluidverbindung steht, stromabwärts der Kammer (15) angeordnet ist und sich in der Vorschubrichtung des Kühlfluids in dem Kühlkreislauf (14) erstreckt; und/oder
**dadurch gekennzeichnet, dass** das Schneidelement (11) lösbar mit dem Rahmen (10) verbunden ist.

12. Schneidvorrichtung nach Anspruch 11, **dadurch gekennzeichnet, dass** das Schneidelement (11) zwischen mindestens einem Bügel (50) und dem Rahmen (10) lösbar eingespannt ist;
wobei der Bügel (50) mit dem Rahmen (10) verschraubt ist.

13. Schneidvorrichtung nach Anspruch 12, unter Rückbezug auf einen der Ansprüche 2 bis 11, **dadurch gekennzeichnet, dass** sie mindestens einen Sitz (51) aufweist, der der zweiten Wand (16) in Bezug auf die erste Wand (15) gegenüberliegt, den Bügel (50) aufnimmt und durch eine Wand (21) des Rahmens (10) definiert ist; wobei die Wand (21) den Rahmen (10) an der axialen Seite des Schneidelements (11) begrenzt.

14. Schneidvorrichtung nach einem der vorhergehenden Ansprüche,
**dadurch gekennzeichnet, dass** der Rahmen (10) Führungsmittel (55) umfasst, die so beschaffen sind, dass sie mit entsprechenden Führungsmitteln (55) einer entsprechenden Schneidvorrichtung (6, 4) in Kontakt kommen, um eine Beeinträchtigung zwischen der Schneidfläche (12) und einer entsprechenden Schneidfläche (12) der entsprechenden Schneidvorrichtung (6, 4) zu vermeiden;
wobei die Führungsmittel (55) ein Paar von Führungen (55) aufweisen, mit jeweils ebenen Abschnitten (58), die senkrecht zu der zweiten Achse (A) verlaufen;
wobei sich die Abschnitte (58) parallel zu der ersten Achse (Y) über die Schneidfläche (12) hinaus erstrecken und an der zweiten Achse (A) näherliegen als die Schneidfläche (12);
wobei die Führungen (55) lösbar mit einer Wand (21) des Rahmens (10) verbunden sind; wobei die Wand (21) den Rahmen (10) auf der axialen Seite des Schneidelements (11) begrenzt.

15. Anordnung (1) zum Schneiden eines Stabes (2) mit einer ersten Schneidvorrichtung (4) und einer zweiten Schneidvorrichtung (6) nach einem der vorhergehenden Ansprüche;
wobei die erste Schneidvorrichtung (4) und die zweite Schneidvorrichtung (6) relativ zueinander entlang der ersten Achse (Y) beweglich sind und auf der gegenüberliegenden Seite der zweiten Achse (A) angeordnet sind, entlang der sich der Stab (2) im Gebrauch vorwärts bewegt;
wobei die erste Schneidvorrichtung (4) und die zweite Schneidvorrichtung (6) parallel zur zweiten Achse (A) versetzt sind.

## Revendications

1. Dispositif de coupe (4, 6) pour couper à chaud une tige (2), de préférence une tige (2) en acier, le long d'un premier axe (Y) comprenant :
un bâti (10) ;
un élément de coupe (11) qui est monté sur ledit bâti (10), comprend une surface de coupe en forme d'arc (12) adaptée, à l'usage, pour couper ladite tige (2) et définit un siège ouvert (13) délimité par ladite surface de coupe (12) ; et
un circuit de réfrigération (14) qui est adapté pour réfrigérer ladite surface de coupe (12) et est défini par ledit bâti (10) ;
ledit circuit de réfrigération (14) comprenant une chambre (15) qui peut être remplie avec un fluide de réfrigération et est thermiquement couplé avec ladite surface de coupe (12) pour extraire la chaleur de ladite surface de coupe (12) ;
**caractérisé en ce que** ladite chambre (15) est délimitée par une première paroi (16) qui est en forme d'arc, s'étend sur le côté opposé dudit siège (13) par rapport à ladite surface de coupe (12) et par rapport audit premier axe (Y) et s'étend parallèlement à ladite surface de coupe (12) dans une section transversale prise orthogonalement par rapport à un second axe (A) orthogonal audit premier axe (Y) et le long duquel ladite tige (2) est, à l'usage, avancée ;
ledit siège (13) étant coaxial par rapport audit second axe (A).

2. Dispositif de coupe selon la revendication 1, **caractérisé en ce que** ladite première paroi (16) est en forme d'arc autour dudit second axe (A) et a une longueur le long dudit second axe (A).

3. Dispositif de coupe selon la revendication 1 ou 2, **caractérisé en ce que** ladite chambre (15) comprend une deuxième paroi (17) qui est en forme d'arc et est opposée à ladite première paroi (16) le long dudit premier axe (Y).

4. Dispositif de coupe selon l'une des revendications précédentes, **caractérisé en ce que** ladite première paroi (16) a une extension plus étroite que ladite surface de coupe (12) parallèle audit second axe (A) ; et/ou
**caractérisé en ce que** ledit bâti (10) comprend une troisième paroi (27) qui est axialement intercalée entre ladite surface de coupe (12) et ladite première paroi (16) radialement par rapport audit second axe (A).

5. Dispositif de coupe selon la revendication 4, **caractérisé en ce que** ladite troisième paroi (27) a sensiblement la même longueur de ladite surface de coupe (12) le long dudit second axe (A).

6. Dispositif de coupe selon la revendication 4 ou 5, **caractérisé en ce que** ladite première paroi (16) a une longueur inférieure à ladite surface de coupe (12) et/ou à ladite troisième paroi (27) le long dudit second axe (A).

7. Dispositif de coupe selon l'une quelconque des revendications 4 à 6, lorsqu'elle dépend de l'une quelconque des revendications 2 ou 3, **caractérisé en ce que** ladite troisième paroi (27) délimite ledit bâti (10) sur le côté dudit siège (13) ;
une première distance entre des points homologues de ladite troisième paroi (27) et de ladite première paroi (16), mesurée radialement par rapport audit second axe (A) étant inférieure à une seconde distance entre des points homologues de ladite deuxième paroi (17) et de ladite première paroi (16), mesurée radialement par rapport audit second axe (A).

8. Dispositif de coupe selon l'une quelconque des revendications précédentes, **caractérisé en ce que** ledit élément de coupe (11) comprend un disque en forme d'arc (35) s'étendant autour dudit second axe (A) ;
ladite surface de coupe (12) faisant saillie dudit élément de disque (35) le long dudit second axe (A).

9. Dispositif de coupe selon la revendication 8, **caractérisé en ce que** ladite chambre (15) est fermée par ledit bâti (10) sur un premier côté le long dudit second axe (A) et est fermée par ledit disque (35) sur un second côté, opposé audit premier côté, le long dudit second axe (A).

10. Dispositif de coupe selon les revendications 8 ou 9, **caractérisé en ce que** ledit bâti (10) définit une fente de forme fermée (30) qui entoure une extrémité axiale de ladite chambre (15) sur le côté dudit disque (35) ;
ledit dispositif de coupe (4, 6) comprenant en outre un joint d'étanchéité (31) qui met en prise ladite fente (30) et est comprimé entre ledit disque (35) et ledit bâti (10).

11. Dispositif de coupe selon l'une quelconque des revendications précédentes, **caractérisé en ce que** ledit circuit de réfrigération (14) comprend :
un conduit d'entrée (60) qui est raccordé, de manière fluidique, avec ladite chambre (15) et est agencé en amont de ladite chambre (15), continuant selon la direction d'avancement dudit fluide de réfrigération à l'intérieur dudit circuit de réfrigération (14) ;
un conduit de sortie (62) qui est raccordé, de manière fluidique, avec ladite chambre (15) et est agencé en aval de ladite chambre (15), continuant selon la direction d'avancement dudit fluide de réfrigération à l'intérieur dudit circuit de réfrigération (14) ; et/ou
**caractérisé en ce que** ledit élément de coupe (11) est raccordé, de manière détachable, audit bâti (10).

12. Dispositif de coupe selon la revendication 11, **caractérisé en ce que** ledit élément de coupe (11) est serré, de manière amovible, entre au moins un support (50) et ledit bâti (10) ;
ledit support (50) étant vissé sur ledit bâti (10).

13. Dispositif de coupe selon la revendication 12, lorsqu'elle dépend de l'une quelconque des revendications 2 à 11, **caractérisé en ce qu'**il comprend au moins un siège (51) qui est opposé à ladite deuxième paroi (16) par rapport à ladite première paroi (15), reçoit ledit support (50) et est défini par une paroi (21) dudit bâti (10) ; ladite paroi (21) délimitant ledit bâti (10) sur le côté axial dudit élément de coupe (11).

14. Dispositif de coupe selon l'une quelconque des revendications précédentes, **caractérisé en ce que** ledit bâti (10) comprend des moyens de guidage (55) qui sont adaptés pour être en contact avec des moyens de guidage (55) correspondants d'un dispositif de coupe (6, 4) correspondant, afin d'éviter l'interférence entre ladite surface de coupe (12) et une surface de coupe (12) correspondante dudit dispositif de coupe (6, 4) correspondant ;
lesdits moyens de guidage (55) comprenant une paire de guides (55) ayant chacun des parties planes (58) respectives orthogonales audit second axe (A) ;
lesdites parties (58) s'étendant, parallèlement audit premier axe (Y), au-delà de ladite surface de coupe (12) et étant plus près que ladite surface de coupe (12) dudit second axe (A) ;
lesdits guides (55) étant raccordés, de manière amovible, à une paroi (21) dudit bâti (10) ; ladite paroi (21) délimitant ledit bâti (10) sur le côté axial dudit élément de coupe (11).

15. Ensemble (1) pour couper une tige (2) comprenant un premier dispositif de coupe (4) et un second dispositif de coupe (6) selon l'une quelconque des revendications précédentes ;
ledit premier dispositif de coupe (4) et ledit second dispositif de coupe (6) étant mobiles l'un par rapport à l'autre le long dudit premier axe (Y) et étant agencés sur le côté opposé dudit second axe (A) le long duquel ladite tige (2) avance, à l'usage ;
ledit premier dispositif de coupe (4) et ledit second dispositif de coupe (6) étant décalés parallèlement audit second axe (A).
